# EUROPEAN PATENT APPLICATION

(11) **EP 4 462 307 A1**
(43) Date of publication of application: **13.11.2024**
(21) Application number: 24167196.5
(22) Date of filing: 28.03.2024
(51) Int. Cl.: G06N 3/045, G06N 3/0475, G06N 20/00, G06F 21/60, G06F 40/30

(54) **SYSTEMS AND METHODS FOR SECURITY-AWARE LARGE LANGUAGE MODEL TRAINING AND MODEL MANAGEMENT**

(30) Priority: 12.04.2023 US 202363458783 P
(71) Applicant: Palantir Technologies Inc., Denver, CO 80202 (US)
(72) Inventor: WILCZYNSKI, Peter, Denver, 80202 (US)
(74) Representative: Sayer, Robert David

(57) **Abstract**

In some examples, systems and methods for access control in relation to training machine learning models (e.g., large language models) are disclosed. More particularly, some embodiments of the present disclosure relate to training and management of language models. For example, a method includes: receiving a model permission requirement; receiving a training corpus; segmenting the training corpus into a segmented training corpus based at least in part on the model permission requirement; training a machine learning model using the segmented training corpus; and associating the trained machine learning model with the model permission requirement.

## Description

### CROSS REFERENCE TO RELATED APPLICATIONS

This application claims priority to U.S. Provisional Application No. 63/458,783, entitled "SYSTEMS AND METHODS FOR SECURITY-AWARE LARGE LANGUAGE MODEL TRAINING AND MODEL MANAGEMENT," and filed on April 12, 2023.

### TECHNICAL FIELD

Certain embodiments of the present disclosure relate to access control in relation to training machine learning models (e.g., large language models). More particularly, some embodiments of the present disclosure relate to training and management of language models in which, for example, only a segment or subset of a training corpus is used for training a machine learning model to avoid users, when using the trained machine learning model, inadvertently accessing data which they do not have permission to access.

### BACKGROUND

Machine-learning (ML) models (e.g., language models) often use large amount of data collected from multiple data sources for training. In some embodiments, multiple data sources for the ML model training may have different access and/or use requirements. In certain embodiments, a system may use two or more machine learning models. Some types of ML models may, for example, generate new results or values for particular users that have never existed before and which may contain data that, under normal circumstances, those users do not have access to.

Hence, it is desirable to improve techniques for training and management of machine-learning models to improve access control in the above sense which may also provide advantages in terms of processing efficiency and time to train machine learning models.

### SUMMARY

Certain embodiments of the present disclosure relate to machine learning models (e.g., large language models). More particularly, some embodiments of the present disclosure relate to training and management of language models.

At least some embodiments are directed to a method for managing training corpus and one or more machine learning models. In certain embodiments, the method includes: receiving a model permission requirement; receiving a training corpus; segmenting the training corpus into a segmented training corpus based at least in part on the model permission requirement; training a machine learning model using the segmented training corpus; and associating the trained machine learning model with the model permission requirement.

At least certain embodiments are directed to a method for managing generative AI models. In some embodiments, the method includes: receiving a plurality of generative AI models associated with a plurality of model permission requirements; receiving a process request including a usage permission level; comparing the usage permission level with each model permission requirement of the plurality of model permission requirements; selecting a requested generative AI model from the plurality of generative AI models based at least in part on the comparison; and allowing the process request to access the requested generative AI model.

At least some embodiments are directed to a system for managing training corpus and one or more machine learning models. In certain embodiments, the system includes: one or more memories having instructions stored thereon; and one or more processors configured to execute the instructions and perform operations comprising: receiving a model permission requirement; receiving a training corpus; segmenting the training corpus into a segmented training corpus based at least in part on the model permission requirement; training a machine learning model using the segmented training corpus; and associating the trained machine learning model with the model permission requirement.

Depending upon embodiment, one or more benefits may be achieved. These benefits and various additional objects, features and advantages of the present disclosure can be fully appreciated with reference to the detailed description and accompanying drawings that follow.

### BRIEF DESCRIPTION OF THE DRAWINGS

Figure 1 is a simplified diagram showing a method for training and managing a machine learning model (e.g., an LLM, a generative AI model, etc.) according to certain embodiments of the present disclosure.
Figure 2 is an illustrative environment for training, managing, and using one or more AI models, according to certain embodiments of the present disclosure.
Figure 3 is a simplified diagram showing a method for managing and/or using one or more ML models (e.g., LLMs, generative AI models, etc.) according to certain embodiments of the present disclosure.
Figure 4 is an illustrative example of an operating environment for training, managing, and/or using one or more ML models, according to certain embodiments of the present disclosure.
Figure 5 is a simplified diagram showing a computing system for implementing a system for training, using, and managing one or more ML models (e.g., one or more LLMs, one or more generative AI models) in accordance with at least one example set forth in the disclosure.

### DETAILED DESCRIPTION

Unless otherwise indicated, all numbers expressing feature sizes, amounts, and physical properties used in the specification and claims are to be understood as being modified in all instances by the term "about." Accordingly, unless indicated to the contrary, the numerical parameters set forth in the foregoing specification and attached claims are approximations that can vary depending upon the desired properties sought to be obtained by those skilled in the art utilizing the teachings disclosed herein. The use of numerical ranges by endpoints includes all numbers within that range (e.g., 1 to 5 includes 1, 1.5, 2, 2.75, 3, 3.80, 4, and 5) and any number within that range.

Although illustrative methods may be represented by one or more drawings (e.g., flow diagrams, communication flows, etc.), the drawings should not be interpreted as implying any requirement of, or particular order among or between, various steps disclosed herein. However, some embodiments may require certain steps and/or certain orders between certain steps, as may be explicitly described herein and/or as may be understood from the nature of the steps themselves (e.g., the performance of some steps may depend on the outcome of a previous step). Additionally, a "set," "subset," or "group" of items (e.g., inputs, algorithms, data values, etc.) may include one or more items and, similarly, a subset or subgroup of items may include one or more items. A "plurality" means more than one.

As used herein, the term "based on" is not meant to be restrictive, but rather indicates that a determination, identification, prediction, calculation, and/or the like, is performed by using, at least, the term following "based on" as an input. For example, predicting an outcome based on a particular piece of information may additionally, or alternatively, base the same determination on another piece of information. As used herein, the term "receive" or "receiving" means obtaining from a data repository (e.g., database), from another system or service, from another software, or from another software component in a same software. In certain embodiments, the term "access" or "accessing" means retrieving data or information, and/or generating data or information.

According to certain embodiments, a machine learning model can include training data (e.g., a part of training corpus) embedded in the model. In some embodiments, a generative AI (artificial intelligence) model includes training data embedded in the model. In certain embodiments, a generative AI model is a type of AI model that can be used to produce various type of content, such as text, images, videos, audio, 3D (three-dimensional) data, 3D models, and/or the like. In some embodiments, a language model or a large language model (LLM), which is a type of generative AI models, includes content and training data embedded in the model. In certain embodiments, a generative AI model may be subject to greater risk of allowing unauthorized access to data due to the training data embedded in the model.

According to some embodiments, systems and methods of the present disclosure are directed to managing training corpus based on permission requirements to train machine learning models using different sets of training corpus (e.g., training data set). In certain embodiments, training LLMs using one or more selected sets of datasets (e.g., datasets can be accessed under a permission requirement, a segmented training corpus) can reduce or prevent the risks of unauthorized access to data, which may be referred to hereinafter as a data leak. The training time may also be reduced as the segmented training corpus may involve training machine learning models using less data than would be the case if the entire training corpus was used. In some embodiments, data includes content such as, for example, text data, image data, video data, music data, audio data, creative content, and/or the like.

In some embodiments, the machine learning model is a language model ("LM") that may include an algorithm, rule, model, and/or other programmatic instructions that can predict the probability of a sequence of words. In some embodiments, a language model may, given a starting text string (e.g., one or more words), predict the next word in the sequence. In certain embodiments, a language model may calculate the probability of different word combinations based on the patterns learned during training (based on a set of text data from books, articles, websites, audio files, etc.). In some embodiments, a language model may generate many combinations of one or more next words (and/or sentences) that are coherent and contextually relevant. In certain embodiments, a language model can be an advanced artificial intelligence algorithm that has been trained to understand, generate, and manipulate language. In some embodiments, a language model can be useful for natural language processing, including receiving natural language prompts and providing natural language responses based on the text on which the model is trained. In certain embodiments, a language model may include an n-gram, exponential, positional, neural network, and/or other type of model.

In certain embodiments, the machine learning model is a large language model (LLM), which was trained on a larger data set and has a larger number of parameters (e.g., billions of parameters) compared to a regular language model. In certain embodiments, an LLM can understand more complex textual inputs and generate more coherent responses due to its extensive training. In certain embodiments, an LLM can use a transformer architecture that is a deep learning architecture using an attention mechanism (e.g., which inputs deserve more attention than others in certain cases). In some embodiments, a language model includes an autoregressive language model, such as a Generative Pretrained Transformer 3 (GPT-3) model, a GPT 3.5-turbo model, a Claude model, a command-xlang model, a bidirectional encoder representations from transformers (BERT) model, a pathways language model (PaLM) 2, and/or the like.

According to certain embodiments, a system may associate a data permission requirement with dataset (e.g., training corpus, training datasets). In some embodiments, the system may associate a model permission requirement with a machine learning model (e.g., a generative AI model). In certain embodiments, the system may associate a user permission requirement (e.g., a usage permission requirement) with a request to use a machine learning model. In some embodiments, a data permission requirement, a model permission requirement, and/or a user permission requirement (e.g., a usage permission requirement) includes a security level and/or an access level. In certain embodiments, a security level and an access level are collectively referred to as a permission level. In some embodiments, the security level can be one of a set of security levels (e.g., classified, unclassified, restricted, etc.).

According to some embodiments, the permission level, the security level (e.g., the security clearance level) and/or the access level can be hierarchical. In certain embodiments, a first permission level being higher than a second permission level refers to a model permission level and/or a usage permission level at the first permission level can access data of the first permission level and data of the second permission level. In some embodiments, a first permission level being higher than a second permission level refers to a model permission level and/or a usage permission level at the second permission level can access data of the second permission level but cannot access data of the first permission level.

In certain embodiments, a first security level being higher than a second security level refers to a model security level and/or a usage security level at the first security level can access data of the first security level and data of the second security level. In some embodiments, a first security level being higher than a second security level refers to a model security level and/or a usage security level at the second security level can access data of the second security level but cannot access data of the first security level.

In certain embodiments, a first access level being higher than a second access level refers to a model access level and/or a usage access level at the first access level can access data of the first access level and data of the second access level. In some embodiments, a first access level being higher than a second access level refers to a model access level and/or a usage access level at the second access level can access data of the second access level but cannot access data of the first access level. In certain embodiments, a first access level being parallel to a second access level refers to a model access level and/or a usage access level at the first access level can access data of the first access level but cannot access data of the second access level. In some embodiments, an access level includes allowing data access by a group of users. In certain embodiments, a first access level allows data access by a first group of users and a second access level allows data access by a second group of users.

In some embodiments, a system can generate a plurality of LLMs, where each LLM is trained with a specific training corpus (e.g., a training dataset) associated with a permission requirement. In certain embodiments, each LLM of the plurality of LLMs is assigned to a model permission requirement corresponding to a dataset's permission requirement. In some embodiments when a process requirement including a usage permission requirement (e.g., user permission requirement) is received, a system can select a LLM having a model permission requirement that satisfies the usage permission requirement for the process requirement. In certain embodiments, the system can select a LLM having a proper model permission requirement to prevent data leak.

According to some embodiments, LLMs are trained on training corpus, but rather than returning only links to the corpus like a search engine, they also create de novo content. In certain embodiments, an LLM may include a lossy compression of the corpus. In certain embodiments, unlike a search engine that returns a list of references, the results of an LLM are new values which may have never existed before and which may contain sensitive information. In some embodiments, the potential for unauthorized access to data (data leaks) for LLMs can be large. In certain embodiments, for an organization, the challenge is to avoid accidentally enabling access to sensitive data, declassifying sensitive data or changing the security clearance level of sensitive data (e.g., classified).

According to certain embodiments, a system can train a machine learning model (e.g., an LLM) based on permission requirements (e.g., to treat the model as a user agent than a language model) and the trained machine learning model can be used according to the permission requirements. In some embodiments, a training LLM should be run at a given security level, and users should only be able to access the LLM if the user security clearance level meets the security level of the LLM. For example, a user (e.g.., a process request) has a security clearance level at level 3 corresponding to a security level 3 that is higher than security level 2 and security level 1. In this example, the user can access the LLM at security level 3, the LLM at security level 2, and the LLM at security level 1.

According to some embodiments, the system and/or the entity using the system may allow users to switch their security. In certain embodiments, a system used by an entity (e.g., an organization, a company, an institution, etc.) may include a plurality of LLMs trained with a plurality of permission requirements (e.g., a plurality of different security levels). In some embodiments, the system can provide customization of an LLM (e.g., an LLM trained or continuously trained with datasets with a specific permission requirement), for example, for an individual or a group of users. In certain embodiments, the system is configured to load a corpus for training with a given security authorization, and then require users to meet that authorization in order to query the LLM in order to prevent leaks.

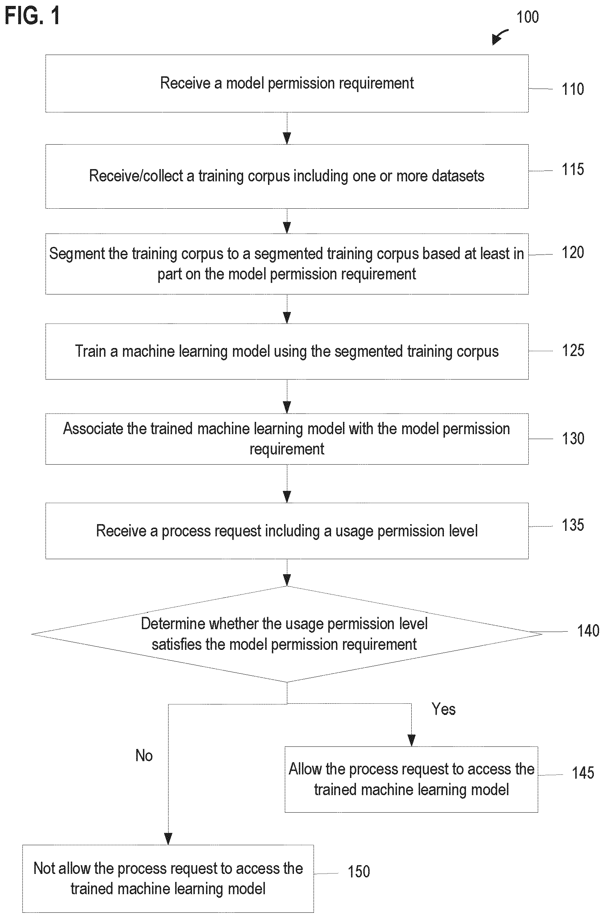

Figure 1 is a simplified diagram showing a method 100 for training and managing a machine learning model (e.g., an LLM, a generative AI model, etc.) according to certain embodiments of the present disclosure. This diagram is merely an example. One of ordinary skill in the art would recognize many variations, alternatives, and modifications. The method 100 for training and managing a machine learning model includes processes 110, 115, 120, 125, 130, 135, 140, 145, and 150. Although the above has been shown using a selected group of processes for the method 100 for training and managing a machine learning model, there can be many alternatives, modifications, and variations. For example, some of the processes may be expanded and/or combined. Other processes may be inserted to those noted above. Depending upon the embodiment, the sequence of processes may be changed, and one or more processes may be replaced. Further details of these processes are found throughout the present disclosure.

In some embodiments, some or all processes (e.g., steps) of the method 100 are performed by a system (e.g., the computing system 500). In certain examples, some or all processes (e.g., steps) of the method 100 are performed by a computer and/or a processor directed by a code. For example, a computer includes a server computer and/or a client computer (e.g., a personal computer). In some examples, some or all processes (e.g., steps) of the method 100 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at the process 110, the system receives a model permission requirement. In certain embodiments, the model permission requirement includes a security level (e.g., a security clearance level) and/or an access level. In some embodiments, a security level of a model indicates a minimum security level for a user and/or a usage to allow the access (e.g., use) of the model. In certain examples, if a security level of a model is N, the user or the usage having the security level equal to or higher than N (e.g., more secure than N) can access the model. In some examples, if a security level of a model is N, the user or the usage having the security level lower than N (e.g., more secure than N) cannot access the model. For example, a "classified" security level is higher than an "unclassified" security level.

In certain embodiments, an access level of a model indicates a minimum access level and/or required access level for a user and/or a usage to allow the access (e.g., use) of the model. In some embodiments, an access level is designated to a group of users (e.g., a group of users within an entity, a type of users, a user role, etc.). In certain embodiments, the access level is hierarchical such that a higher access level indicates narrower data access than the data access of a lower access level. For example, an access level of "all company" is lower than an access level of "division A". As an example, an access level of "division A" is parallel to an access level of "division B". In certain examples, if an access level of a model is N, the user or the usage having the access level equal to or higher than access level N (e.g., more secure than N, narrower access than access level N) can access the model. In some examples, if an access level of a model is N, the user or the usage having the access level lower than N (e.g., less secure than N) cannot access the model.

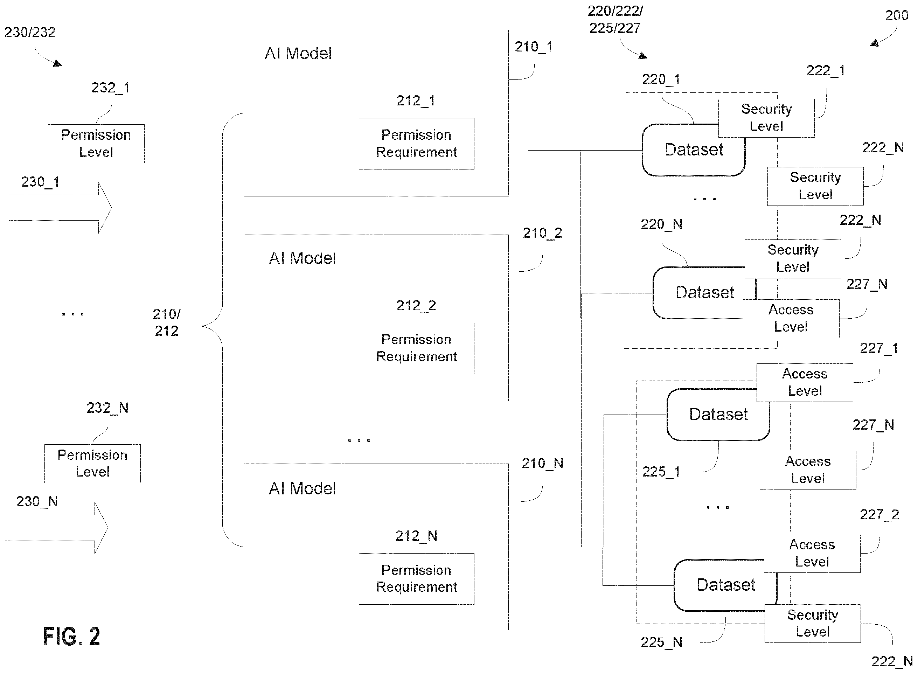

According to certain embodiments, at process 115, the system collects and/or receives a training corpus including one or more datasets. In some embodiments, at process 120, the system segments the training corpus to a segmented training corpus based at least in part on the model permission requirement. In certain embodiments, the segmented training corpus includes one or more selected datasets. Figure 2 is an illustrative environment 200 for training, managing, and using one or more AI models 210 according to certain embodiments of the present disclosure. In some embodiments, each AI model 210 is associated and/or assigned with a permission requirement 212. In certain embodiments, the system segments the training corpus (e.g., training datasets) 220 and/or 225 into different datasets (e.g., 220_1, ..., 220_N, 225_1, ..., 225_N, etc.), each dataset associated with a corresponding security level 222 and/or a corresponding access level 227. In some embodiments, the system selects one or more datasets for the segmented training corpus. In certain embodiments, each selected dataset has a corresponding security level and/or a corresponding access level that satisfies the model permission requirement.

According to some embodiments, at process 125, the system trains a machine learning (ML) model (e.g., a generative AI model, a large language model, etc.) using the segmented training corpus. In certain embodiments, the system trains the ML model using the one or more selected datasets, where each dataset meets the model permission requirement. In some embodiments, each dataset of the one or more selected datasets has a corresponding security level equal to or higher than the minimum security level in the model permission requirement. In certain embodiments, each dataset of the one or more selected datasets has a corresponding access level equal to or higher than the access level in the model permission requirement.

According to certain embodiments, at process 130, the system associates the trained ML model with the model permission requirement. In some embodiments, the system assigns the model permission requirement (e.g., the security level, the access level) to the trained machine model. In certain embodiments, the model permission requirement is assigned as metadata of the trained ML model. In some embodiments, an ML model (e.g., a generative AI model, a large language model) is trained by a plurality of training corpus (e.g., a plurality of segmented training corpus) to generate a plurality of different trained ML models, where each trained ML model is assigned to a model permission requirement. In certain embodiments, the trained ML model includes a first trained ML model and a second trained ML model, where the first trained ML model has been trained using a first training dataset and the second train ML model has been trained using a second training dataset. In some embodiments, the trained ML model is generated by training a first ML model using the first training dataset and training the first ML model using the second training dataset.

According to some embodiments, at process 135, the system receives a process request including a usage permission level. In certain embodiments, the usage permission level includes a security level (e.g., a security clearance level) and/or an access level. In some embodiments, at process 140, the system determines whether the usage permission level satisfies the model permission requirement. In certain embodiments, the usage permission level includes a security level, and the usage permission level satisfies the model permission requirement if the security level is equal to or higher than a minimum security level included in the model permission requirement.

In some embodiments, the usage permission level includes an access level, and the usage permission level satisfies the model permission requirement if the access level is equal to and/or higher than a specified access level included in the model permission requirement. In certain embodiments, the usage permission level includes a security level and an access level, and the usage permission level satisfies the model permission requirement if the security level is equal to or higher than a minimum security level included in the model permission requirement, and if the access level is equal to and/or higher than a specified access level included in the model permission requirement. In some embodiments, the usage permission level is associated with a user. In certain embodiments, the usage permission level is associated with a group of users.

According to certain embodiments, at process 145, if the usage permission level satisfies the model permission requirement, the system allows the process request to access the trained ML model. In some embodiments, the trained ML model includes the first trained ML model and the second trained ML model, where the system is configured to apply the first trained ML model to the process data and apply the second trained ML model to the process data, and to create a result by applying an ensemble model to the first trained ML model result and the second trained ML model result. In certain embodiments, the trained ML model includes two or more trained ML models, where the system is configured to apply each trained ML model to the process data to generate a model result, and to create a result by applying an ensemble model to the two or more trained ML model results.

According to some embodiments, to access the trained ML model includes to submit a query to the trained ML model. In certain embodiments, to access the trained ML model includes to use the trained ML data to process data in the process request. In some embodiments, at process 150, if the usage permission level does not satisfy the model permission requirement, the system does not allow the process request to access the trained ML model. According to certain embodiments, at least one or more processes of the method 100 are for preventing data leaks. For example, at process 145, the system allows access to the trained ML model if the usage permission level satisfies the model permission requirement of the trained ML model to prevent leaks, improve data security, and/or improve the trained ML model (e.g., to improve the effectiveness of the model).

Figure 2 is an illustrative AI model environment 200 for training, managing, and using one or more AI models 210 according to certain embodiments of the present disclosure. In some embodiments, the AI model environment 200 includes one or more IA models 210, one or more corresponding model permission requirements 212, one or more datasets 220 and 225, one or more corresponding security levels 222 and/or access levels 227, and one or more process requests (e.g., process requirements) 230 including one or more usage permission levels 232. Although the above has been shown using a selected group of components in the AI model environment 200, there can be many alternatives, modifications, and variations. For example, some of the components may be expanded and/or combined. Other components may be inserted into those noted above. Depending upon the embodiment, the arrangement of components may be interchanged with others replaced. Further details of these components are found throughout the present disclosure.

According to certain embodiments, the AI model environment 200 includes a plurality of AI models 210 (e.g., model 210_1, model 210_2, ..., model 210_N, etc.), where each AI model 210 is associated with a corresponding model permission requirement 212 (e.g., permission requirement 212_1, permission requirement 212_2, ..., permission requirement 212_N, etc.). In some embodiments, each AI model 210 is associated and/or assigned with a permission requirement 212. According to some embodiments, the AI model environment 200 includes a computing system (e.g., an AI model management system) to train, use, and manage the AI models 210. In certain embodiments, the system segments the training corpus 220 and/or 225 into different datasets (e.g., 220_1, ..., 220_N, 225_1, ..., 225_N, etc.), each dataset associated with and/or assigned to a corresponding security level 222 and/or a corresponding access level 227.

In some embodiments, the dataset 220_N is associated with and/or assigned to a security level 222_N and an access level 227_N. In certain embodiments, the dataset 220_1 is associated with and/or assigned to a security level 222_1. In some embodiments, the dataset 220_1, .... and the dataset 220_N collectively are associated with and/or assigned to the security level 222_N. In certain embodiments, the security level 222_N is assigned to the lowest security level of the respective security levels 222_1, ..., and 222_N of the datasets 220. In some embodiments, the dataset 225_1, .... and the dataset 225_N collectively are associated with and/or assigned to the access level 227_N. In certain embodiments, the access level 227_N is assigned to the lowest access level of the access levels 227_1, ..., and 227_N of the datasets 225.

In some embodiments, the system selects one or more datasets for the segmented training corpus. In certain embodiments, each selected dataset 220 has a corresponding security level 222 and/or a corresponding access level 227 that satisfies the model permission requirement 212. In some embodiments, the security level 222 satisfies the model permission requirement 212 if the security level 222 is equal to or higher than a security level in the model permission requirement 212. In some embodiments, the dataset 220_1, ..., and the dataset 220_N are accessible by users of security level 222_N (e.g., lowest security level).

In certain embodiments, the access level 227 satisfies the model permission requirement 212 if the access level 227 is equal to or higher than the access level in the model permission requirement 212. In some embodiments, the access level 227_1 and the access level 227_2 is parallel to each other. In certain embodiments, the dataset 225_1 and the dataset 225_N are accessible by different groups of users respectively (e.g., Group A, Group B). In some embodiments, the dataset 225_1, ..., and the dataset 225_N are accessible by users of access level 227_N (e.g., lowest access level).

According to some embodiments, the system receives one or more process requests 230 (e.g., process request 230_1, ..., process request 230_N). In certain embodiments, each process request 230 includes a usage permission level 232 (e.g., usage permission level 232_1, ..., usage permission level 232_N). In some embodiments, the system evaluates the usage permission level 232 and selects one or more AI models 210 of which permission requirements the usage permission level 232 satisfies. In certain embodiments, the system selects the AI model 210 that has the highest permission requirement 212 among the one or more selected AI models 210. In some embodiments, the system selects the AI model 210 that has the lowest permission requirement 212 among the one or more selected AI models 210.

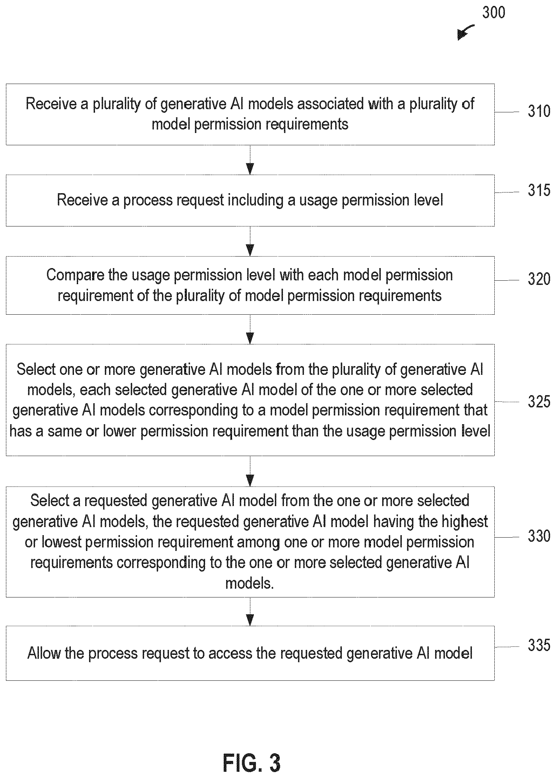

Figure 3 is a simplified diagram showing a method 300 for managing and/or using one or more ML models (e.g., LLMs, generative AI models, etc.) according to certain embodiments of the present disclosure. This diagram is merely an example. One of ordinary skill in the art would recognize many variations, alternatives, and modifications. The method 300 for managing and/or using one or more ML models includes processes 310, 315, 320, 325, 330, and 335. Although the above has been shown using a selected group of processes for the method 300 for managing and/or using one or more ML models, there can be many alternatives, modifications, and variations. For example, some of the processes may be expanded and/or combined. Other processes may be inserted to those noted above. Depending upon the embodiment, the sequence of processes may be changed, and one or more processes may be replaced. Further details of these processes are found throughout the present disclosure.

In some embodiments, some or all processes (e.g., steps) of the method 300 are performed by a system (e.g., the computing system 500). In certain examples, some or all processes (e.g., steps) of the method 300 are performed by a computer and/or a processor directed by a code. For example, a computer includes a server computer and/or a client computer (e.g., a personal computer). In some examples, some or all processes (e.g., steps) of the method 300 are performed according to instructions included by a non-transitory computer-readable medium (e.g., in a computer program product, such as a computer-readable flash drive). For example, a non-transitory computer-readable medium is readable by a computer including a server computer and/or a client computer (e.g., a personal computer, and/or a server rack). As an example, instructions included by a non-transitory computer-readable medium are executed by a processor including a processor of a server computer and/or a processor of a client computer (e.g., a personal computer, and/or server rack).

According to some embodiments, at process 310, the system receives a plurality of generative AI models (e.g., ML models, LLMs) associated with a plurality of model permission requirements. In certain embodiments, each generative AI model is associated with a model permission requirement. In some embodiments, at process 315, the system receives a process request including a usage permission level (e.g., a usage permission requirement).

According to certain embodiments, at process 320, the system compares the usage permission level with each model permission requirement of the plurality of model permission requirements. In some embodiments, at process 325, the system selects one or more generative AI models from the plurality of generative AI models, each selected generative AI model of the one or more selected generative AI models corresponding to a model permission requirement that has a same or higher permission requirement as the usage permission level. In certain embodiments, for the usage permission level including a security level and/or an access level, a selected model includes a model permission requirement that is a same or lower security level and/or access level as the usage permission level, for example, associated with a user. In some examples, a usage permission level including a security level of "classified" request can access one or more AI models having a respective permission requirement including a security level that is "classified" or lower. In certain examples, a usage permission level including an access level of "Group A" request can access one or more AI models having a respective permission requirement including an access level that is "Group A" or lower (e.g., broader, "all company", etc.).

According to some embodiments, at process 330, the system selects a requested generative AI model from the one or more selected generative AI models, where the requested generative AI model has the highest or lowest permission requirement among one or more model permission requirements corresponding to the one or more selected generative AI models. In certain embodiments, the requested generative AI model has the highest permission requirement (e.g., highest security level, highest access level) among one or more model permission requirements corresponding to the one or more selected generative AI models. In some embodiments, the requested generative AI model has the lowest permission requirement (e.g., lowest security level, lowest access level) among one or more model permission requirements corresponding to the one or more selected generative AI models. In certain embodiments, at process 335, the system allows the process request to access the requested generative AI model.

According to certain embodiments, at least one or more processes of the method 300 are for preventing data leaks. For example, at process 335, the system allows access to the requested generative AI model to prevent leaks, improve data security, and/or improve the generative AI model (e.g., to improve the effectiveness of the model).

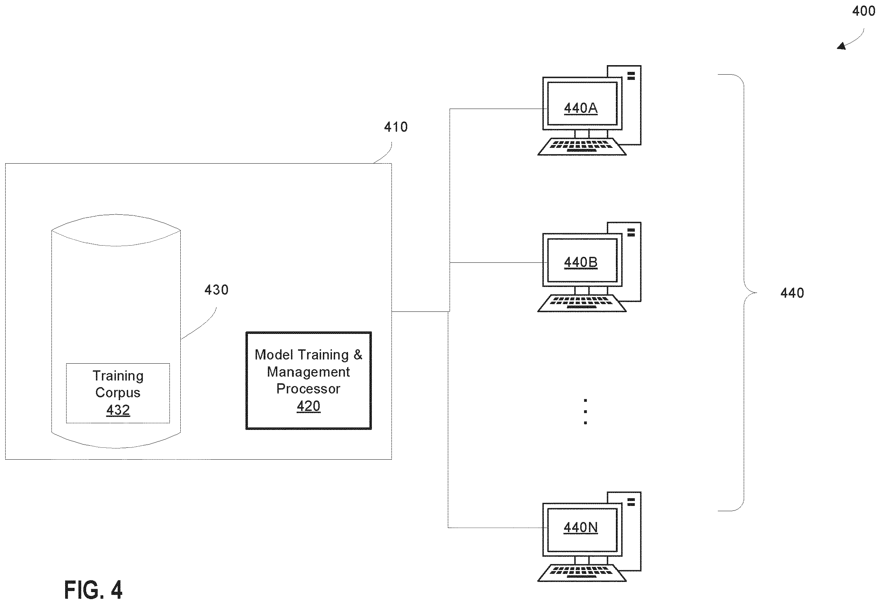

Figure 4 is an illustrative example of an operating environment 400 for training, managing, and/or using one or more ML models, according to certain embodiments of the present disclosure. Figure 4 is merely an example. One of the ordinary skilled in the art would recognize many variations, alternatives, and modifications. According to certain embodiments, the operating environment 400 includes one or more model training and managing system 410 and one or more computing devices 440 (e.g., computing device 440A, computing device 440B, ..., computing device 440N). In some embodiments, the model training and management system 410 includes one or more model training and management processor 420 and a repository 430. In certain embodiments, the repository 430 includes a data repository 432 (e.g., training corpus 432). In certain embodiments, one or more components of the model training and management system 410 are included in the one or more computing devices 440. In certain embodiments, the model training and management system 410 or a portion (e.g., one or more components) of the model training and management system 410 can be integrated with the one or more computing devices 440.

Although the above has been shown using a selected group of components in the operating environment 400, there can be many alternatives, modifications, and variations. For example, some of the components may be expanded and/or combined. Other components may be inserted into those noted above. Depending upon the embodiment, the arrangement of components may be interchanged with others replaced. Further details of these components are found throughout the present disclosure.

According to some embodiments, the model training and management system 410 and/or the model training and management processor 420 receives a model permission requirement. In certain embodiments, the model permission requirement includes a security level (e.g., a security clearance level) and/or an access level. In some embodiments, a security level of a model indicates a minimum security level for a user and/or a usage to allow the access (e.g., use) of the model. In certain examples, if a security level of a model is N, the user or the usage having the security level equal to or higher than N (e.g., more secure than N) can access the model. In some examples, if a security level of a model is N, the user or the usage having the security level lower than N (e.g., more secure than N) cannot access the model. For example, a "classified" security level is higher than an "unclassified" security level.

In certain embodiments, an access level of a model indicates a minimum access level and/or required access level for a user and/or a usage to allow the access (e.g., use) of the model. In some embodiments, an access level is designated to a group of users (e.g., a group of users within an entity, a type of users, a user role, etc.). In certain embodiments, the access level is hierarchical such that a higher access level indicates narrower data access than the data access of a lower access level. For example, an access level of "all company" is lower than an access level of "division A". As an example, an access level of "division A" is parallel to an access level of "division B". In certain examples, if an access level of a model is N, the user or the usage having the access level equal to or higher than access level N (e.g., more secure than N, narrower access than access level N) can access the model. In some examples, if an access level of a model is N, the user or the usage having the access level lower than N (e.g., less secure than N) cannot access the model.

According to certain embodiments, the model training and management system 410 and/or the model training and management processor 420 collects and/or receives a training corpus including one or more datasets. In some embodiments, at process 120, the model training and management system 410 and/or the model training and management processor 420 segments the training corpus to a segmented training corpus based at least in part on the model permission requirement. In certain embodiments, the segmented training corpus includes one or more selected datasets. Figure 2 is an illustrative environment 200 for training, managing, and using one or more AI models 210. In some embodiments, each AI model 210 is associated and/or assigned with a permission requirement 212. In certain embodiments, the model training and management system 410 and/or the model training and management processor 420 segments the training corpus 220 and/or 225 into different datasets (e.g., 220_1, ..., 220_N, 225_1, ..., 225_N, etc.), each dataset associated with a corresponding security level 222 and/or a corresponding access level 227. In some embodiments, the model training and management system 410 and/or the model training and management processor 420 selects one or more datasets for the segmented training corpus. In certain embodiments, each selected dataset has a corresponding security level and/or a corresponding access level that satisfies the model permission requirement.

According to some embodiments, the model training and management system 410 and/or the model training and management processor 420 trains a machine learning (ML) model (e.g., a generative AI model, a large language model, etc.) using the segmented training corpus. In certain embodiments, the model training and management system 410 and/or the model training and management processor 420 trains the ML model using the one or more selected datasets, where each dataset meets the model permission requirement. In some embodiments, each dataset of the one or more selected datasets has a corresponding security level equal to or higher than the minimum security level in the model permission requirement. In certain embodiments, each dataset of the one or more selected datasets has a corresponding access level equal to or higher than the access level in the model permission requirement.

According to certain embodiments, the model training and management system 410 and/or the model training and management processor 420 associates the trained ML model with the model permission requirement. In some embodiments, the model training and management system 410 and/or the model training and management processor 420 assigns the model permission requirement (e.g., the security level, the access level) to the trained machine model. In certain embodiments, the model permission requirement is assigned as metadata of the trained ML model. In some embodiments, an ML model (e.g., a generative AI model, a large language model) is trained by a plurality of training corpus (e.g., a plurality of segmented training corpus) to generate a plurality of different trained ML models, where each trained ML model is assigned to a model permission requirement. In certain embodiments, the trained ML model includes a first trained ML model and a second trained ML model, where the first trained ML model has been trained using a first training dataset and the second train ML model has been trained using a second training dataset. In some embodiments, the trained ML model is generated by training a first ML model using the first training dataset and training the first ML model using the second training dataset.

According to some embodiments, the model training and management system 410 and/or the model training and management processor 420 receives a process request including a usage permission level. In certain embodiments, the usage permission level includes a security level (e.g., a security clearance level) and/or an access level. In some embodiments, at process 140, the model training and management system 410 and/or the model training and management processor 420 determines whether the usage permission level satisfies the model permission requirement. In certain embodiments, the usage permission level includes a security level, and the usage permission level satisfies the model permission requirement if the security level is equal to or higher than a minimum security level included in the model permission requirement.

In some embodiments, the usage permission level includes an access level, and the usage permission level satisfies the model permission requirement if the access level is equal to and/or higher than a specified access level included in the model permission requirement. In certain embodiments, the usage permission level includes a security level and an access level, and the usage permission level satisfies the model permission requirement if the security level is equal to or higher than a minimum security level included in the model permission requirement, and if the access level is equal to and/or higher than a specified access level included in the model permission requirement. In some embodiments, the usage permission level is associated with a user. In certain embodiments, the usage permission level is associated with a group of users.

According to certain embodiments, if the usage permission level satisfies the model permission requirement, the model training and management system 410 and/or the model training and management processor 420 allows the process request to access the trained ML model. In some embodiments, the trained ML model includes the first trained ML model and the second trained ML model, where the model training and management system 410 and/or the model training and management processor 420 is configured to apply the first trained ML model to the process data and apply the second trained ML model to the process data, and to create a result by applying an ensemble model to the first trained ML model result and the second trained ML model result. In certain embodiments, the trained ML model includes two or more trained ML models, where the model training and management system 410 and/or the model training and management processor 420 is configured to apply each trained ML model to the process data to generate a model result, and to create a result by applying an ensemble model to the two or more trained ML model results.

According to some embodiments, to access the trained ML model includes to submit a query to the trained ML model. In certain embodiments, to access the trained ML model includes to use the trained ML data to process data in the process request. In some embodiments, if the usage permission level does not satisfy the model permission requirement, the model training and management system 410 and/or the model training and management processor 420 does not allow the process request to access the trained ML model. According to certain embodiments, the model training and management system 410 and/or the model training and management processor 420 allows access to the trained ML model if the usage permission level satisfies the model permission requirement of the trained ML model to prevent leaks, improve data security, and/or improve the trained ML model (e.g., to improve the effectiveness of the model).

According to some embodiments, the model training and management system 410 and/or the model training and management processor 420 receives a plurality of generative AI models (e.g., ML models, LLMs) associated with a plurality of model permission requirements. In certain embodiments, each generative AI model is associated with a model permission requirement. In some embodiments, the model training and management system 410 and/or the model training and management processor 420 receives a process request including a usage permission level (e.g., a usage permission requirement).

According to certain embodiments, the model training and management system 410 and/or the model training and management processor 420 compares the usage permission level with each model permission requirement of the plurality of model permission requirements. In some embodiments, the model training and management system 410 and/or the model training and management processor 420 selects one or more generative AI models from the plurality of generative AI models, each selected generative AI model of the one or more selected generative AI models corresponding to a model permission requirement that has a same or higher permission requirement as the usage permission level. In certain embodiments, for the usage permission level including a security level and/or an access level, a selected model includes a model permission requirement that is a same or lower security level and/or access level as the usage permission level, for example, associated with a user. In some examples, a usage permission level including a security level of "classified" request can access one or more AI models having a respective permission requirement including a security level that is "classified" or lower. In certain examples, a usage permission level including an access level of "Group A" request can access one or more AI models having a respective permission requirement including an access level that is "Group A" or lower (e.g., broader, "all company", etc.).

According to some embodiments, the model training and management system 410 and/or the model training and management processor 420 selects a requested generative AI model from the one or more selected generative AI models, where the requested generative AI model has the highest or lowest permission requirement among one or more model permission requirements corresponding to the one or more selected generative AI models. In certain embodiments, the requested generative AI model has the highest permission requirement (e.g., highest security level, highest access level) among one or more model permission requirements corresponding to the one or more selected generative AI models.

In some embodiments, the requested generative AI model has the lowest permission requirement (e.g., lowest security level, lowest access level) among one or more model permission requirements corresponding to the one or more selected generative AI models. In certain embodiments, the model training and management system 410 and/or the model training and management processor 420 allows the process request to access the requested generative AI model. According to certain embodiments, the model training and management system 410 and/or the model training and management processor 420 allows access to the requested generative AI model to prevent leaks, improve data security, and/or improve the generative AI model (e.g., to improve the effectiveness of the model).

In some embodiments, the repository 430 can include one or more AI models, one or more model permission requirements, one or more datasets (e.g., training datasets, training corpus), one or more trained AI/MI, models, and/or the like. The repository 430 may be implemented using any one of the configurations described below. A data repository may include random access memories, flat files, XML files, and/or one or more database management systems (DBMS) executing on one or more database servers or a data center. A database management system may be a relational (RDBMS), hierarchical (HDBMS), multidimensional (MDBMS), object oriented (ODBMS or OODBMS) or object relational (ORDBMS) database management system, and the like. The data repository may be, for example, a single relational database. In some cases, the data repository may include a plurality of databases that can exchange and aggregate data by data integration process or software application. In an exemplary embodiment, at least part of the data repository may be hosted in a cloud data center. In some cases, a data repository may be hosted on a single computer, a server, a storage device, a cloud server, or the like. In some other cases, a data repository may be hosted on a series of networked computers, servers, or devices. In some cases, a data repository may be hosted on tiers of data storage devices including local, regional, and central.

In some cases, various components in the operating environment 400 can execute software or firmware stored in non-transitory computer-readable medium to implement various processing steps. Various components and processors of the operating environment 400 can be implemented by one or more computing devices including, but not limited to, circuits, a computer, a cloud-based processing unit, a processor, a processing unit, a microprocessor, a mobile computing device, and/or a tablet computer. In some cases, various components of the operating environment 400 (e.g., the system 410, the processor 420, one or more computing devices 440) can be implemented on a shared computing device. Alternatively, a component of the operating environment 400 can be implemented on multiple computing devices. In some implementations, various modules and components of the operating environment 400 can be implemented as software, hardware, firmware, or a combination thereof. In some cases, various components of the 400 can be implemented in software or firmware executed by a computing device.

Various components of operating environment 400 can communicate via or be coupled to via a communication interface, for example, a wired or wireless interface. The communication interface includes, but is not limited to, any wired or wireless short-range and long-range communication interfaces. The short-range communication interfaces may be, for example, local area network (LAN), interfaces conforming known communications standard, such as Bluetooth^{®} standard, IEEE 802 standards (e.g., IEEE 802.11), a ZigBee^{®} or similar specification, such as those based on the IEEE 802.15.4 standard, or other public or proprietary wireless protocol. The long-range communication interfaces may be, for example, wide area network (WAN), cellular network interfaces, satellite communication interfaces, etc. The communication interface may be either within a private computer network, such as intranet, or on a public computer network, such as the internet.

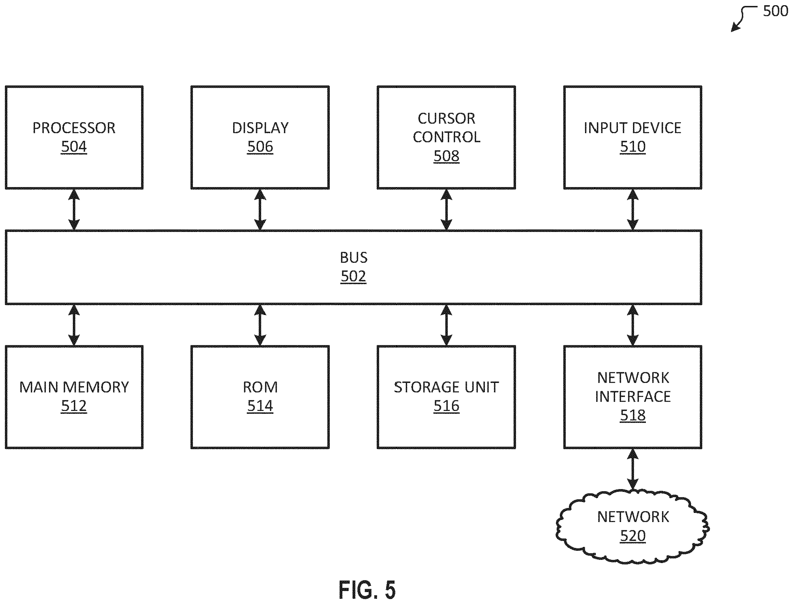

Figure 5 is a simplified diagram showing a computing system for implementing a system 500 for training, using, and managing one or more ML models (e.g., one or more LLMs, one or more generative AI models) in accordance with at least one example set forth in the disclosure. This diagram is merely an example, which should not unduly limit the scope of the claims. One of ordinary skill in the art would recognize many variations, alternatives, and modifications.

The computing system 500 includes a bus 502 or other communication mechanism for communicating information, a processor 504, a display 506, a cursor control component 508, an input device 510, a main memory 512, a read only memory (ROM) 514, a storage unit 516, and a network interface 518. In some embodiments, some or all processes (e.g., steps) of the methods 100 and/or 300 are performed by the computing system 500. In some examples, the bus 502 is coupled to the processor 504, the display 506, the cursor control component 508, the input device 510, the main memory 512, the read only memory (ROM) 514, the storage unit 516, and/or the network interface 518. In certain examples, the network interface is coupled to a network 520. For example, the processor 504 includes one or more general purpose microprocessors. In some examples, the main memory 512 (e.g., random access memory (RAM), cache and/or other dynamic storage devices) is configured to store information and instructions to be executed by the processor 504. In certain examples, the main memory 512 is configured to store temporary variables or other intermediate information during execution of instructions to be executed by processor 504. For examples, the instructions, when stored in the storage unit 516 accessible to processor 504, render the computing system 500 into a special-purpose machine that is customized to perform the operations specified in the instructions. In some examples, the ROM 514 is configured to store static information and instructions for the processor 504. In certain examples, the storage unit 516 (e.g., a magnetic disk, optical disk, or flash drive) is configured to store information and instructions.

In some embodiments, the display 506 (e.g., a cathode ray tube (CRT), an LCD display, or a touch screen) is configured to display information to a user of the computing system 500. In some examples, the input device 510 (e.g., alphanumeric and other keys) is configured to communicate information and commands to the processor 504. For example, the cursor control component 508 (e.g., a mouse, a trackball, or cursor direction keys) is configured to communicate additional information and commands (e.g., to control cursor movements on the display 506) to the processor 504.

According to certain embodiments, a method for managing training corpus and one or more machine learning models, the method comprising: receiving a model permission requirement; receiving a training corpus; segmenting the training corpus into a segmented training corpus based at least in part on the model permission requirement; training a machine learning model using the segmented training corpus; and associating the trained machine learning model with the model permission requirement; wherein the method is performed by one or more processors. For example, the method is implemented according to at least Figure 1, Figure 2, Figure 3, and/or Figure 4.

In some embodiments, the model permission requirement includes a first permission level that is higher than a second permission level; wherein the segmenting the training corpus to a segmented training corpus includes: segmenting the training corpus to a first set of training corpus based at least in part on the first permission level; segmenting the training corpus to a second set of training corpus based at least in part on the second permission level; and wherein the segmented training corpus includes the first set of training corpus and the second set of training corpus. In certain embodiments, the training a machine learning model includes: training the machine learning model using the second set of training corpus to generate a first trained machine learning model; and training the first trained machine learning model using the first set of training corpus to generate the trained machine learning model. In some embodiments, the training a machine learning model includes: training the machine learning model using the second set of training corpus to generate a first trained machine learning model; and training the machine learning model using the first set of training corpus to generate a second trained machine learning model; wherein the method further comprises: applying the first trained machine learning model to user data to generate a first model result; applying the second trained machine learning model to user data to generate a second model result; and applying an ensemble model to the first model result and the second model result to generate an ensemble result.

In certain embodiments, the method further comprises: receiving a process request including a usage permission level and a request to use the trained machine learning model; determining whether the usage permission level satisfies the model permission requirement; if the usage permission level satisfies the model permission requirement, allowing the process request to access the trained machine learning model; and if the usage permission level does not satisfy the model permission requirement, not allowing the process request to access the trained machine learning model. In some embodiments, the method further comprises: assigning a first weight to the first set of training corpus; and assigning a second weight to the second set of training corpus; wherein the first weight is different from the second weight; wherein the training a machine learning model includes training the machine learning model using the first set of training corpus and the second set of training corpus based at least in part on the first weight and the second weight. In certain embodiments, the machine learning model includes a large language model. In some embodiments, the machine learning model includes a part of the training corpus embedded in the machine learning model. In certain embodiments, the data permission requirement includes a security level or an access level.

According to certain embodiments, a method for managing generative AI models, the method comprising: receiving a plurality of generative AI models associated with a plurality of model permission requirements; receiving a process request including a usage permission level; comparing the usage permission level with each model permission requirement of the plurality of model permission requirements; selecting a requested generative AI model from the plurality of generative AI models based at least in part on the comparison; and allowing the process request to access the requested generative AI model; wherein the method is performed by one or more processors. For example, the method is implemented according to at least Figure 1, Figure 2, Figure 3, and/or Figure 4.

In some embodiments, the selecting a requested generative AI model from the plurality of generative AI models comprises: selecting one or more generative AI models from the plurality of generative AI models, each selected generative AI model of the one or more selected generative AI models corresponding to a model permission requirement that has a same or lower permission requirement than the usage permission level. In certain embodiments, the selecting a requested generative AI model from the plurality of generative AI models further comprises: selecting the requested generative AI model from the one or more selected generative AI models, the requested generative AI model having the highest permission requirement among one or more model permission requirements corresponding to the one or more selected generative AI models. In some embodiments, the selecting a requested generative AI model from the plurality of generative AI models further comprises: selecting the requested generative AI model from the one or more selected generative AI models, the requested generative AI model having the lowest permission requirement among one or more model permission requirements corresponding to the one or more selected generative AI models.

According to certain embodiments, a system for managing training corpus and one or more machine learning models, the system includes: one or more memories having instructions stored thereon; and one or more processors configured to execute the instructions and perform operations comprising: receiving a model permission requirement; receiving a training corpus; segmenting the training corpus into a segmented training corpus based at least in part on the model permission requirement; training a machine learning model using the segmented training corpus; and associating the trained machine learning model with the model permission requirement. For example, the system is implemented according to at least Figure 1, Figure 2, Figure 3, and/or Figure 4.

In some embodiments, the model permission requirement includes a first permission level that is higher than a second permission level; wherein the segmenting the training corpus to a segmented training corpus includes: segmenting the training corpus to a first set of training corpus based at least in part on the first permission level; segmenting the training corpus to a second set of training corpus based at least in part on the second permission level; and wherein the segmented training corpus includes the first set of training corpus and the second set of training corpus. In certain embodiments, the training a machine learning model includes: training the machine learning model using the second set of training corpus to generate a first trained machine learning model; and training the first trained machine learning model using the first set of training corpus to generate the trained machine learning model. In some embodiments, the training a machine learning model includes: training the machine learning model using the second set of training corpus to generate a first trained machine learning model; and training the machine learning model using the first set of training corpus to generate a second trained machine learning model; wherein the operations further comprise: applying the first trained machine learning model to user data to generate a first model result; applying the second trained machine learning model to user data to generate a second model result; and applying an ensemble model to the first model result and the second model result to generate an ensemble result.

In certain embodiments, the operations further comprise: receiving a process request including a usage permission level and a request to use the trained machine learning model; determining whether the usage permission level satisfies the model permission requirement; if the usage permission level satisfies the model permission requirement, allowing the process request to access the trained machine learning model; and if the usage permission level does not satisfy the model permission requirement, not allowing the process request to access the trained machine learning model. In some embodiments, the operations further comprise: assigning a first weight to the first set of training corpus; and assigning a second weight to the second set of training corpus; wherein the first weight is different from the second weight; wherein the training a machine learning model includes training the machine learning model using the first set of training corpus and the second set of training corpus based at least in part on the first weight and the second weight. In certain embodiments, the machine learning model includes a large language model. In some embodiments, the machine learning model includes a part of the training corpus embedded in the machine learning model. In certain embodiments, the data permission requirement includes a security level or an access level.

For example, some or all components of various embodiments of the present disclosure each are, individually and/or in combination with at least another component, implemented using one or more software components, one or more hardware components, and/or one or more combinations of software and hardware components. In another example, some or all components of various embodiments of the present disclosure each are, individually and/or in combination with at least another component, implemented in one or more circuits, such as one or more analog circuits and/or one or more digital circuits. In yet another example, while the embodiments described above refer to particular features, the scope of the present disclosure also includes embodiments having different combinations of features and embodiments that do not include all of the described features. In yet another example, various embodiments and/or examples of the present disclosure can be combined.

Additionally, the methods and systems described herein may be implemented on many different types of processing devices by program code comprising program instructions that are executable by the device processing subsystem. The software program instructions may include source code, object code, machine code, or any other stored data that is operable to cause a processing system (e.g., one or more components of the processing system) to perform the methods and operations described herein. Other implementations may also be used, however, such as firmware or even appropriately designed hardware configured to perform the methods and systems described herein.

The systems' and methods' data (e.g., associations, mappings, data input, data output, intermediate data results, final data results, etc.) may be stored and implemented in one or more different types of computer-implemented data stores, such as different types of storage devices and programming constructs (e.g., RAM, ROM, EEPROM, Flash memory, flat files, databases, programming data structures, programming variables, IF-THEN (or similar type) statement constructs, application programming interface, etc.). It is noted that data structures describe formats for use in organizing and storing data in databases, programs, memory, or other computer-readable media for use by a computer program.

The systems and methods may be provided on many different types of computer-readable media including computer storage mechanisms (e.g., CD-ROM, diskette, RAM, flash memory, computer's hard drive, DVD, etc.) that contain instructions (e.g., software) for use in execution by a processor to perform the methods' operations and implement the systems described herein. The computer components, software modules, functions, data stores and data structures described herein may be connected directly or indirectly to each other in order to allow the flow of data needed for their operations. It is also noted that a module or processor includes a unit of code that performs a software operation and can be implemented for example as a subroutine unit of code, or as a software function unit of code, or as an object (as in an object-oriented paradigm), or as an applet, or in a computer script language, or as another type of computer code. The software components and/or functionality may be located on a single computer or distributed across multiple computers depending upon the situation at hand.

The computing system can include client devices and servers. A client device and server are generally remote from each other and typically interact through a communication network. The relationship of client device and server arises by virtue of computer programs running on the respective computers and having a client device-server relationship to each other.

This specification contains many specifics for particular embodiments. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations, one or more features from a combination can in some cases be removed from the combination, and a combination may, for example, be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Although specific embodiments of the present disclosure have been described, it will be understood by those of skill in the art that there are other embodiments that are equivalent to the described embodiments. Accordingly, it is to be understood that the invention is not to be limited by the specific illustrated embodiments. Various modifications and alterations of the disclosed embodiments will be apparent to those skilled in the art. The embodiments described herein are illustrative examples. The features of one disclosed example can also be applied to all other disclosed examples unless otherwise indicated. It should also be understood that all U.S. patents, patent application publications, and other patent and non-patent documents referred to herein are incorporated by reference, to the extent they do not contradict the foregoing disclosure.

## Claims

1. A method (100) for managing training corpus and one or more machine learning models, the method comprising:
receiving (110) a model permission requirement;
receiving (115) a training corpus;
segmenting (120) the training corpus into a segmented training corpus based at least in part on the model permission requirement;
training (125) a machine learning model using the segmented training corpus; and
associating (130) the trained machine learning model with the model permission requirement;
wherein the method is performed by one or more processors.

2. The method of claim 1, wherein the model permission requirement includes a first permission level that is higher than a second permission level;
wherein the segmenting the training corpus to a segmented training corpus includes:
segmenting the training corpus to a first set of training corpus based at least in part on the first permission level; and
segmenting the training corpus to a second set of training corpus based at least in part on the second permission level; and
wherein the segmented training corpus includes the first set of training corpus and the second set of training corpus.

3. The method of claim 2, wherein the training a machine learning model includes:
training the machine learning model using the second set of training corpus to generate a first trained machine learning model; and
training the first trained machine learning model using the first set of training corpus to generate the trained machine learning model.

4. The method of claim 2,
wherein the training a machine learning model includes:
training the machine learning model using the second set of training corpus to generate a first trained machine learning model; and
training the machine learning model using the first set of training corpus to generate a second trained machine learning model;
wherein the method further comprises:
applying the first trained machine learning model to user data to generate a first model result;
applying the second trained machine learning model to user data to generate a second model result; and
applying an ensemble model to the first model result and the second model result to generate an ensemble result.

5. The method of any preceding claim, further comprising:
receiving a process request including a usage permission level and a request to use the trained machine learning model;
determining whether the usage permission level satisfies the model permission requirement;
if the usage permission level satisfies the model permission requirement, allowing the process request to access the trained machine learning model; and
if the usage permission level does not satisfy the model permission requirement, not allowing the process request to access the trained machine learning model.

6. The method of claim 2 or any claim dependent thereon, further comprising:
assigning a first weight to the first set of training corpus; and
assigning a second weight to the second set of training corpus;
wherein the first weight is different from the second weight;
wherein the training a machine learning model includes training the machine learning model using the first set of training corpus and the second set of training corpus based at least in part on the first weight and the second weight.

7. The method of any preceding claim, wherein the machine learning model includes a large language model.

8. The method of any preceding claim, wherein the machine learning model includes a part of the training corpus embedded in the machine learning model.

9. The method of any preceding claim, wherein the model permission requirement includes a security level or an access level.

10. A method (300) for managing generative AI models, the method comprising:
receiving (310) a plurality of generative AI models associated with a plurality of model permission requirements;
receiving (315) a process request including a usage permission level;
comparing (320) the usage permission level with each model permission requirement of the plurality of model permission requirements;
selecting (325, 330) a requested generative AI model from the plurality of generative AI models based at least in part on the comparison; and
allowing (335) the process request to access the requested generative AI model;
wherein the method is performed by one or more processors.

11. The method of claim 10, wherein the selecting a requested generative AI model from the plurality of generative AI models comprises:
selecting one or more generative AI models from the plurality of generative AI models, each selected generative AI model of the one or more selected generative AI models corresponding to a model permission requirement that has a same or lower permission requirement than the usage permission level.

12. The method of claim 11, wherein the selecting a requested generative AI model from the plurality of generative AI models further comprises:
selecting the requested generative AI model from the one or more selected generative AI models, the requested generative AI model having a highest permission requirement among one or more model permission requirements corresponding to the one or more selected generative AI models.

13. The method of claim 11, wherein the selecting a requested generative AI model from the plurality of generative AI models further comprises:
selecting the requested generative AI model from the one or more selected generative AI models, the requested generative AI model having a lowest permission requirement among one or more model permission requirements corresponding to the one or more selected generative AI models.

14. A system for managing training corpus and one or more machine learning models, the system comprising:
one or more memories having instructions stored thereon; and
one or more processors configured to execute the instructions and perform a method accordance with any preceding claim.
